# EUROPÄISCHE PATENTSCHRIFT

(11) **EP 0 689 280 B1**
(45) Veröffentlichungstag und Bekanntmachung des Hinweises auf die Patenterteilung: **08.09.1999**
(21) Anmeldenummer: 95109029.9
(22) Anmeldetag: 12.06.1995
(51) Int. Cl.: H02M 3/156

(54) **Schaltungsanordnung zur Begrenzung der Ausgangsspannung eines getakteten Spannungsreglers**
Circuit arrangement for limiting the output voltage of a switch-mode voltage controller
Disposition de circuit pour limiter la tension de sortie d'une régulateur de tension à découpage

(30) Priorität: 23.06.1994 DE 4422066
(43) Veröffentlichungstag der Anmeldung: 27.12.1995
(73) Patentinhaber: SIEMENS AKTIENGESELLSCHAFT, 80333 München (DE)
(72) Erfinder: Bichler, Helmut, Ing., D-82166 Gräfelfing (DE); Herfurth, Michael, Dipl.-Ing., D-82205 Gilching (DE); Feldtkeller, Martin, Dipl.-Ing., D-81543 München (DE); Lenz, Michael, Ing. grad., D-85604 Zorneding (DE)

(56) Entgegenhaltungen:
- WO-A-89/03609
- ELEKTRONIK, Bd. 42, Nr. 23, 16.November 1993, Seiten 86-89, XP000414809 NELSON C ET AL: "BESSERE SCHALTNETZTEILE DURCH LEISTUNGSFAKTOR-KORREKTUR EIN IC SORGT FUR SINUSFORMIGEN STROMVERLAUF"
- SIEMENS COMPONENTS, Bd. 28, Nr. 3, 1.Juli 1993, Seiten 10-14, XP000384942 SCHOTT W: "HIGHER POWER FACTOR FOR SWITCHED-MODE POWER SUPPLIES"

## Beschreibung

Die Erfindung betrifft eine Schaltungsanordnung zur Begrenzung der Ausgangsspannung eines getakteten Spannungsreglers gemäß dem Oberbegriff des Anspruchs 1.

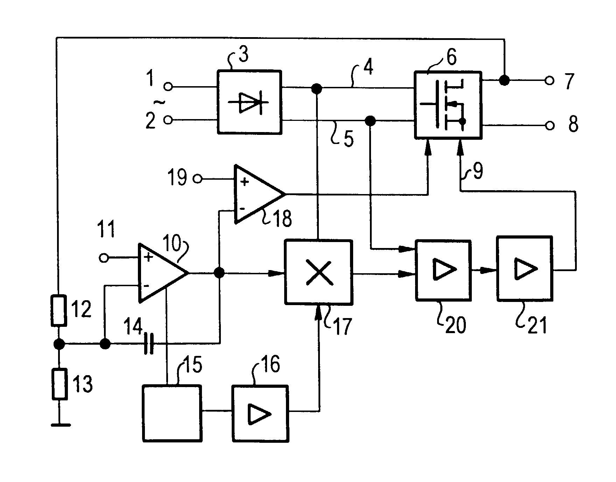

Eine Schaltungsanordnung zur Begrenzung der Ausgangsspannung eines getakteten Spannungsreglers ist z. B. aus Siemens Components 31 (1993), Heft 2, Seite 46ff bekannt. Figur 2 auf Seite 48 zeigt eine Regelstruktur mit einem Multiplizierer zwischen Spannungs- und Stromregler, wodurch dem Sollwert für den Strom die Kurvenform der Eingangsspannung aufgezwungen wird. Auf diese Weise ergibt sich für den aufgenommenen Netzstrom auch im Teillastbereich eine optimale Kurvenform, die auch dann noch erhalten bleibt, wenn der Scheitelwert der Eingangsspannung an die Ausgangsspannung heranreicht. Durch Verwendung einer derartigen Reglerstruktur ist eine Funkentstörung leicht erreichbar. Die Spannungsregelung muß jedoch langsam sein, um einen Leistungsfaktor möglichst nahe 1 zu erhalten, wodurch am Ausgang dynamische Spannungs-Überschwinger auftreten, welche nachgeschaltete Bauelemente gefährden können.

In der Literaturstelle C. Nelson, H. Lemme: "Bessere Schaltnetzteile durch Leistungsfaktor-Korrektur", Elektronik 23/1993, Seiten 86 bis 89 ist eine Schaltungsanordnung eines getakteten Spannungsreglers unter Verwendung des integrierten Bausteins LT1248 beschrieben. Diese enthält neben der vorgenannten Schaltungsanordnung auch einen als Integrierer ausgeführten Spannungsregelverstärker und bildet den Ausgangspunkt der Erfindung. Die Schaltung benötigt jedoch einen Zusatzpin. Darüber hinaus ist ein Leerlaufschutz vorgesehen, der ein Abschalten der Endstufe bewirkt und somit eine Geräuschentwicklung im Verbrauch erzeugen kann.

Der weitere Stand der Technik zeigt verschiedene Maßnahmen. So ist z. B. der Baustein L6560 der Firma SGS-Thomson bekannt, der eine Überspannungserkennung dadurch erreicht, daß er den Strom in einem Integrationskondensator ermittelt. Eine derartige Maßnahme bietet jedoch keinen Leerlaufschutz und der digitale Abschalter der Überspannungsschaltung kann zur Geräuschentwicklung im Verbraucher bei Überspannung führen.

Des weiteren ist eine Überspannungsschutzschaltung der Firma Linear Technology bekannt, welche im Baustein LT1249 realisiert ist. Diese Schaltung bietet einen Leerlaufschutz mit einem Komparator, dem eine Referenzspannung zugeführt wird. Dieser Komparator steuert das Ausgangssignal des Multiplizierer und überwacht eine Stromschwelle und das Schaltverhalten am Multiplizierereingang. Auch bei einer derartigen Anordnung kann es zur Geräuschentwicklung im Verbraucher bei Überspannung kommen.

Alle die vorgenannten Überspannungsschutzschaltungen weisen im wesentlichen nur einen einfachen Komparator auf, der bei Überspannung den Treiberausgang, d. h. die Ansteuerung des Stellelements digital abschaltet. Bei derartigen Reglern mit fester Arbeitsfrequenz greift eine solche digitale Überspannungsabschaltung jedoch völlig unsynchron sowohl bezüglich der Arbeitsfrequenz, als auch der Netzfrequenz ein. Daraus resultiert durch Frequenzüberlagerung eine Verzerrung des Eingangsstroms mit hohem Oberwellenanteil, der auch nichtharmonische Anteile (bezüglich der Netzfrequenz) enthält. Damit wird sowohl das Ziel der sinusförmigen Stromaufnahme verfehlt, als auch durch Komponenten mit akustischer Abstrahlmöglichkeit, z. B. Ferritkerne, ein störendes Geräusch verursacht.

Aufgabe der vorliegenden Erfindung ist es, eine Schaltungsanordnung zur Begrenzung der Ausgangsspannung eines getakteten Spannungsreglers der vorgenannten Art anzugeben, die sowohl einfach im Aufbau ist, wie auch die vorgenannten Nachteile nicht aufweist.

Diese Aufgabe wird durch den kennzeichnenden Teil des Anspruchs 1 gelöst.

Weiterbildungen sind Kennzeichen der Unteransprüche.

Vorteil der Anordnung ist, daß lediglich ein Spannungsteiler und somit auch nur ein Anschlußpin benötigt wird, was zu reduzierten Gehäusekosten führt.

Ein weiterer Vorteil ist, daß die Schaltung durch Hinzufügen eines zusätzlichen Komparators Leerlauffest gestaltet werden kann.

In der US-Patentschrift 4 837 495 ist ein Spannungsregler gezeigt, der einen sehr guten Leistungsfaktor aufweisen soll. Der Spannungsregler arbeitet hierzu nach dem Stromrampenprinzip und verwendet eine Kompensationsschaltung für die Stromrampe. Im übrigen ist als Spannungsregelverstärker auch ein Integrator vorgesehen.

Die Erfindung wird nachfolgend anhand von einer Figur näher erläutert. Es zeigt:
- Figur 1: ein Blockschaltbild einer erfindungsgemäßen Anordnung.

In Figur 1 sind mit 1 und 2 Eingangsklemmen bezeichnet, an denen eine Wechselspannung anlegbar ist. Diese sind mit einer Gleichrichtereinheit 3 verbunden, die Ausgangsleitungen 4 und 5 aufweist, an denen eine gleichgerichtete sinusförmige Spannung abgreifbar ist. Diese wird einer Stelleinheit 6 zugeführt. Der Ausgang der Stelleinheit 6 ist mit Anschlußklemmen 7 und 8 verbunden, an denen die geregelte Ausgangsspannung abgreifbar ist. Mit 9 ist ein Steuereingang der Stelleinheit 6 bezeichnet. Die Ausgangsklemme 7 ist über einen Spannungsteiler 12, 13 mit den invertierenden Eingang eines Operationsverstärkers 10 verbunden. Dem positiven Eingang des Operationsverstärkers 10 wird über die Klemme 11 eine Referenz spannung zugeführt. Der Ausgang des Operationsverstärkers 10 ist über eine Kapazität 14 mit dem invertierenden Eingang rückgekoppelt. Des weiteren ist der Ausgang des Operationsverstärkers 10 mit dem ersten Eingang des Multiplizierers 17 sowie dem invertierenden Eingang eines Komparators 18 verschaltet. Der nicht-invertierende Eingang des Komparators 18 ist mit einer Eingangsklemme 19 verschaltet, der eine weitere Referenzspannung zufügbar ist. Der Ausgang des Komparators 18 ist mit einem zweiten Steuereingang der Stelleinheit 6 verbunden, welche ein dominantes Abschaltsignal aufnimmt. Der zweite Eingang der Multipliziereinheit ist mit der Leitung 4 verschaltet. Der dritte Eingang der Multipliziereinheit 17 ist mit dem Ausgang einer Treiberstufe 16 verbunden, deren Eingang vom Ausgangssignal eines Stromschwellengenerators 15 gesteuert wird. Der Eingang des Stromschwellengenerators ist mit dem Operationsverstärker 10 verbunden und erfaßt den Strom, welcher durch die Kapazität 14 fließt, z. B. über einen zusätzlichen Stromspiegel. Der Ausgang des Multiplizierers 17 ist mit dem ersten Eingang eines Stromregelverstärkers 20 verbunden. Der zweite Eingang des Stromregelverstärkers 20 ist mit der Leitung 5 verschaltet. Das Ausgangssignal des Stromregelverstärkers 20 wird einer Treiberstufe 21 zugeführt. Das Ausgangssignal der Treiberstufe 21 ist mit dem Steuereingang 9 der Stelleinheit 6 verbunden.

Die grundsätzliche Regelung erfolgt über die Multiplikation der dem Regler über die Leitung 4 zugeführten Eingangsspannung mit der Ausgangsspannung des als Spannungsverstärker dienenden Operationsverstärkers 10, welcher die Ausgangsspannung der Stelleinheit 6 über den Spannungsteiler 12, 13 zugeführt bekommt und diese integriert.

Ab einer bestimmten Stromstärke in der Kapazität 14 setzt der Stromschwellengenerator 15 ein und die als Linearverstärker ausgebildete Treiberstufe 16 wird aktiviert. Diese Treiberstufe kann vorzugsweise als OTA ausgebildet sein. Das Ausgangssignal des OTA dient als Amplitudenregeleingangssignal des Multiplizierers 17. Das Ausgangssignal der Multipliziereinheit 17 dient dann zur Vorgabe der Sinusstromsteuerung. Der Linearverstärker 16 reduziert die Multipliziererverstärkung, ohne den Powerfaktor zu verschlechtern.

Zusätzlich ist der Komparator 18 vorgesehen, der die Ausgangsspannung des Operationsverstärkers 10 auf eine Referenzspannung an der Klemme 19 überwacht. Diese Anordnung dient als Leerlaufschutzkomponente und liefert am Ausgang des Komparators 18 ein dominantes Abschaltsignal, welches die Stelleneinheit 6 vorrangig abschaltet. Der Leerlaufschutzkomparator wird nötig, falls Offsetspannungen im Multiplizierer und im nachgeschalteten Stromregler die Stelleinheit 6 nicht sicher abschalten können, weil der Tastgrad nicht auf Null gestellt werden kann.

## Patentansprüche

1. Schaltungsanordnung zur Begrenzung der Ausgangsspannung eines getakteten Spannungsreglers, wobei der getaktete Spannungsregler
eine Stelleinheit (6), an deren Ausgang die Ausgangsspannung abgreifbar ist und dem die zu regelnde Gleichspannung zugeführt wird,
einen ersten Spannungsregelverstärker (10), der als Integrierer mit Integrationskapazität (14) ausgeführt ist und dem die Ausgangsspannung und eine Referenzspannung zugeführt wird,
eine Multipliziereinheit (17), die das Ausgangssignal des Spannungsregelverstärkers und ein erstes aus der zu regelnden Gleichspannung gewonnenes Signal miteinander multipliziert, einen Stromregelverstärker (20), dem das Ausgangssignal des Multiplizierers (17) und ein zweites aus der zu regelnden Gleichspannung gewonnenes Signal, das dem Eingangsstrom der Stelleinheit (6) entspricht, zugeführt wird, sowie eine Treiberstufe (21) aufweist, die das Ausgangssignal des Stromregelverstärkers (20) in ein Ansteuersignal für die Stelleinheit (6) umwandelt,
**dadurch gekennzeichnet,** daß ein Stromschwellengenerator (15) vorgesehen ist, der die Stromstärke des durch die Integrationskapazität (14) des Integrierers (10, 14) erfaßt und daß die Multiplizierereinheit (17) das Ausgangssignal des Stromschwellengenerators (15) mit den beiden anderen Eingangssignalen der Multipliziereinheit (17) multipliziert, so daß die Multiplizierverstärkung reduziert wird, daß ein Komparator (18) vorgesehen ist, der die Ausgangsspannung des Spannungsregelverstärkers (10) erfaßt und bei Überschreiten einer Referenzspannung ein dominantes Abschaltsignal an die Stelleneinheit (6) liefert.

2. Schaltungsanordnung nach Anspruch 1,
**dadurch gekennzeichnet,**
daß das Ausgangssignal des Stromschwellengenerators (15) einem OTA (16) zugeführt wird, dessen Ausgangssignal der Multipliziereinheit (17) zugeführt wird.

## Claims

1. Circuit arrangement for limiting the output voltage of a switched-mode voltage regulator, the switched-mode voltage regulator having
a control unit (6) at whose output the output voltage can be tapped and to which the DC voltage to be regulated is fed,
a first voltage control amplifier (10), which is designed as an integrator with an integrating capacitor (14) and to which the output voltage and a reference voltage are fed,
a multiplier unit (17) which multiplies together the output signal of the voltage control amplifier and a first signal obtained from the DC voltage to be regulated,
a current control amplifier (20) to which the output signal of the multiplier (17) and a second signal, which is obtained from the DC voltage to be regulated and corresponds to the input current of the control unit (6), are fed, as well as a driver stage (21) which converts the output signal of the current control amplifier (20) into a drive signal for the control unit (6),
characterized in that a current threshold generator (15) is provided which detects the current intensity via the integrating capacitor (14) of the integrator (10, 14), and in that the multiplier unit (17) multiplies the output signal of the current threshold generator (15) by the two other input signals of the multiplier unit (17) with the result that the multiplier gain is reduced, and in that a comparator (18) is provided which detects the output voltage of the voltage control amplifier (10) and supplies a dominant switch-off signal to the control unit (6) in the event of overshooting of a reference voltage.

2. Circuit arrangement according to Claim 1, characterized in that the output signal of the current threshold generator (15) is fed to an OTA (16) whose output signal is fed to the multiplier unit (17).

## Revendications

1. Circuit pour la limitation de la tension de sortie d'un régulateur de tension à découpage, le régulateur de tension à découpage comportant
une unité de réglage (6) à la sortie de laquelle la tension de sortie peut être prélevée et auquel la tension continue à réguler est envoyée,
un premier amplificateur de régulation de tension (10) qui est conçu comme intégrateur avec une capacité d'intégration (14) et auquel la tension de sortie et une tension de référence sont envoyées,
un multiplicateur (17) qui multiplie le signal de sortie de l'amplificateur de régulation de tension par un premier signal obtenu à partir de la tension continue à réguler,
un amplificateur de régulation de courant (20) auquel le signal de sortie du multiplicateur (17) et un deuxième signal, qui est obtenu à partir de la tension continue à réguler et qui correspond au courant d'entrée de l'unité de réglage (6), sont envoyés et un étage d'attaque (21) qui transforme le signal de sortie de l'amplificateur de régulation de courant (20) en un signal de commande pour l'unité de réglage (6),
caractérisé par le fait qu'on prévoit un générateur de seuil de courant (15) qui détecte l'intensité du courant passant par la capacité d'intégration (14) de l'intégrateur (10, 14), le multiplicateur (17) multiplie le signal de sortie du générateur de seuil de courant (15) par les deux autres signaux d'entrée du multiplicateur (17) de telle sorte que l'amplification de multiplication est réduite et on prévoit un comparateur (18) qui détecte la tension de sortie de l'amplificateur de régulation de tension (10) et qui, en cas de dépassement d'une tension de référence, fournit un signal de coupure dominant à l'unité de réglage (6).

2. Circuit selon la revendication 1,
caractérisé par le fait que le signal de sortie du générateur de seuil de courant (15) est envoyé à un OTA (16) dont le signal de sortie est envoyé au multiplicateur (17).
